# EUROPEAN PATENT APPLICATION

(11) **EP 2 690 540 A1**
(43) Date of publication of application: **29.01.2014**
(21) Application number: 12305904.0
(22) Date of filing: 24.07.2012
(51) Int. Cl.: G06F 3/0484, G06F 17/50

(54) **A computer-implemented method for optimising the design of a product**

(71) Applicant: Dassault Systèmes, 78140 Velizy Villacoublay (FR)
(72) Inventor: Diguet, Michaël, 92190 MEUDON (FR); El Hannaoui, Mariem, 92100 BOULOGNE-BILLANCOURT (FR); Vallee, Erwan, 92600 ASNIERES (FR)
(74) Representative: Esselin, Sophie

(57) **Abstract**

The invention has for object a computer-implemented method of designing a product, the product being composed of an assembly of components organised hierarchically in a product tree, the method comprising the steps of : initially selecting a component (400, 401) ; determining a path (402) comprising the product tree's components located between the root of the product tree and the initially selected component; navigating through this path by using a scrolling mean in order to choose (403, 403) a candidate component among the path's components ; selecting (405) the said candidate component as a perimeter of design action PDA component; activating at least a functionality (406) required for modifying the component defined as the perimeter of design action.

## Description

This invention relates to a computer-implemented method for easing the design of a product. It is particularly, but not exclusively, applicable to the field of designing of an assembly of object in a Computer-Aided Design application.

Product edition systems are known to include Computer-Aided Design or CAD, which relates to software solutions for authoring product design. A number of product and programs are offered on the market for the design of objects (or parts) or assemblies of objects, forming a product, such as the one provided by Dassault Systèmes under the trademark CATIA. Many products conceived today such as aircrafts or satellites are achieving a high level of complexity. The product is divided into a plurality of components and sub-components.

The components and sub-components of a product designed and developed in a given design stage are usually represented using a tree.

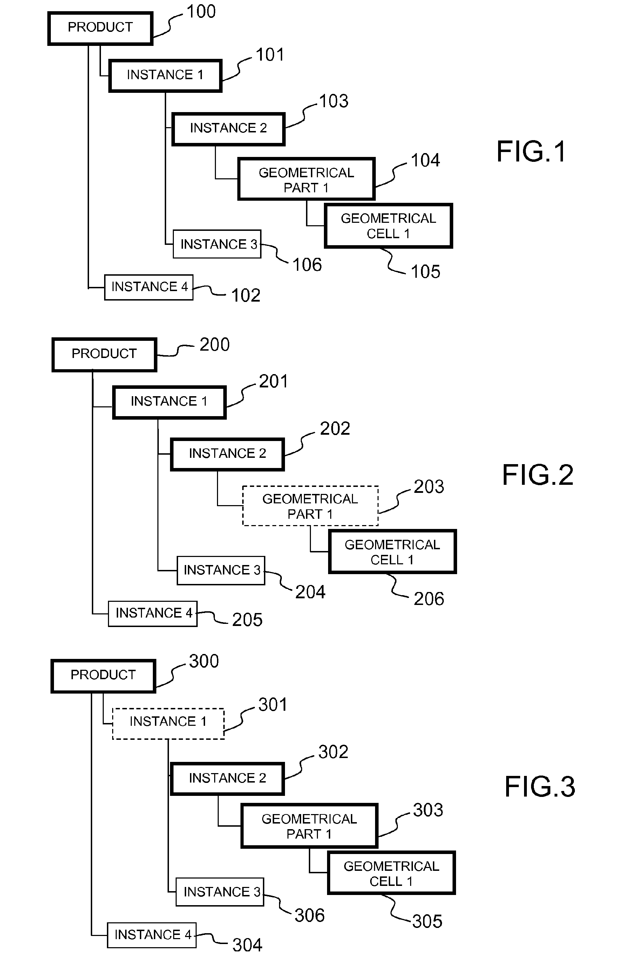

Figure 1 gives an example of product tree. A product tree has a hierarchical structure allowing to organize the assembly of components and subcomponents. In this specification, the following terminology is used. A product 100 is composed of sub-products described by sub-product instances 101, 102. A sub-product 101 may also comprise one or several other sub-products 103, 106 described by their own instances. Additionally, a sub-product may be defined by one or several geometry parts 104, a geometry part being composed of one or several geometry cells 105.

In the description, the term instance refers to the instance of a class, ie an object with a behavior and a state, both defined by the class.

As an example, a skateboard product is composed of several sub-products consisting into a board, two skateboard trucks and four wheels. The board sub-product instance comprises two geometrical parts. A first geometrical part corresponds to a plywood board and a second geometrical part corresponds to a grip tap. The geometrical part corresponding to the plywood board comprises one or several geometrical cells. For example a first geometrical cell is used to set up the thickness of the plywood board and a second geometrical cell is used to set up its width. It appears that the use of a tree is very useful to describe a product design because of its hierarchical structure.

The skilled person would appreciate that this way of describing a product can be used with any other terminology.

In an existing product edition system as CATIA (Trademark), the selection of a component in a product defines a path that may be used as a unique identification marker of the said component. A component may be selected for example by clicking on it.

For example, if the geometry cell 105 in the tree provided by figure 1 is selected, the associated path starts from the product 100, passes through the sub-products instances 101 and 103, passes through the geometrical part 104 and is terminated by the geometrical cell 105. This path can be described by using the following syntax:
path = <product> <instance 1 ><instance 2><geometrical part 1 >< geometrical cell 1 >

The selection of a component in a tree and therefore of a path indicates to the product edition system that the user intents to modify the selected component or, in the case of a sub-product instance, to modify the position of the associated sub-product in the product. For example, the user can select a geometrical cell corresponding to an edge associated to a geometrical part in order to indicate where a round or a fillet should be created. Alternatively, the user can select the said edge in order to introduce a constraint with another component. It can be used for example to ensure that the edge is parallel with a second edge associated to a second geometrical cell, the said geometrical cell belonging to another sub-product instance.

In most of the existing systems, once a component has been selected and its associated path has been constructed, a context in the user's session is defined based on the current UI-active component. A UI-active component is a component that defines the available set of commands that are available to the user by its position in the product tree.

Figure 2 represents a product tree with a geometrical part selected as the UI-active component. At this stage of its design, the product 200 comprises two main instances 201, 205. The product instance 201 comprises two sub-instances 202, 204. The sub-instance 202 comprises a geometrical part 203 and this geometrical part 203 comprises a geometrical cell 206. In this example, the geometrical part 203 is selected as the UI-active component. Therefore, the user can modify the geometrical cell 206. If this geometrical cell 206 corresponds to an edge of the geometrical part 203, the functionalities that are required to modify them are made available to the user. As an example, the user may create a round on this edge. However, he cannot modify geometrical parts other than 203.

Figure 3 represents a product tree with an instance of a sub-product selected as the UI-active component. This product tree is similar to the one provided by figure 2. The product 300 comprises two instances 301, 304. Instance 301 comprises two sub-instances 302, 306. In this example, instance 301 is selected as the UI-active component. Therefore, the system activates the functionalities associated to this working context. Then, the user can modify sub-instances 302 and 306. As an example, the user can introduce a constraint between those two sub-instances that will change their relative position in the product.

The major concern of this approach is that that the product tree needs to be displayed for the user to select the appropriate UI-active component. Additionally, it is required for the user to have a good understanding of how the product is represented in the product tree. As the designed products may be very complex, those may comprise hundreds of components. Therefore, it may be difficult for the user to find rapidly where are located the components he wants to modify and then to find out which appropriate component he should be select as the UI-active component.

The process for selecting a given component as UI-active is not straightforward and may be confusing for the user. For example, if the user wants to modify the geometrical cell 305, he has to display the product tree, he has first to find out where is the current UI-active component. If instance 303 is the current UI-active component, the next step is to find a parent element of geometrical cell 305. This parent element can be instance 302 or geometrical part 303 in the tree. The next step is to select one of those components as the new UI-active component. Then the user can activate the appropriate functionality required for modifying geometrical cell 305 the way he wants.

In order to address the above issues, it would be desirable to develop a solution easing the manipulation of the components of a product and therefore to enhance productivity.

According to the invention, there is provided a computer-implemented method of designing a product, the product being composed of an assembly of components organised hierarchically in a product tree, the method comprising the steps of:
- initially selecting a component;
- determining a path comprising the product tree's components located between the root of the product tree and the initially selected component;
- navigating through this path by using a scrolling mean in order to choose a candidate component among the path's components;
- selecting the said candidate component as a perimeter of design action PDA component;
- activating at least a functionality required for modifying the component defined as the perimeter of design action.

In a preferred embodiment therefore, the initially selected component is chosen as the default perimeter of design action.

The initially selected component and the candidate component can be selected by a user on a graphical representation of the product.

The initially selected component is selected for example by positioning a cursor on a given area of the graphical representation of the product and by clicking on it.

The initially selected component is the component that has the lowest hierarchical level in the product tree and on which the cursor is positioned at the time of selecting it.

In further aspects of the invention, shortcuts towards the functionalities that have been activated for modifying the component designated as the perimeter of design action are displayed near the graphical representation of the product.

In another embodiment, the initially selected component and the candidate component can be selected on a graphical representation of the product tree.

In a preferred embodiment, the scrolling mean is a scroll wheel comprised in a computer mouse.

Alternatively, the scrolling mean can be a touch screen on which the user interact with two fingers, the candidate component being moved towards the higher levels of hierarchy of the product tree when the two fingers move away from each other, and the candidate component being moved towards the lower levels of hierarchy of the product tree when the two fingers approach each others.

The component designated as the perimeter of design action can be highlighted on the graphical representation of the product.

The invention has also for object a computer program product, stored on a computer readable medium comprising code means for causing a computer to implement the method described previously.

The invention has also for object an apparatus for designing an assembly of objects in a system of computer-aided design, the apparatus comprising means for implementing the steps of the method described previously.

A better understanding of the embodiments of the present invention can be obtained from the following detailed description in conjunction with the following drawings, in which:
- figure 1 gives an example of product tree ;
- figure 2 represents a product tree with a geometrical cell selected as the UI-active component ;
- figure 3 represents another product tree with an instance of a sub-product selected as the UI-active component;
- figure 4 provides a simplified diagram of the method according to the invention;
- figure 5 represents a product tree in which a component has been selected as the perimeter of the design action.
- figures 6a is a three-dimensional representation of a product comprising a plate and a set of screws;
- figure 6b gives an example of a product tree that can be associated to the product illustrated on figure 6a
- figure 7a illustrates the step of initially selecting a geometrical cell in a product ;
- figure 7b illustrates the selected path that has been constructed after selecting the geometrical cell ;
- figure 8a illustrates the step of setting up the product instance associated to the fifth screw as the current PDA component ;
- figure 8b gives the location of the PDA component a the selected path ;
- figure 9a illustrates the step of setting up the product instance associated to the set of screws as the current PDA component ;
- figure 9b gives the location of a PDA component in the selected pat
- figure 10a and 10b show how a constraint between the plate and one or several screw can be introduced;
- figure 11 shows the effect of applying a constraint between a screw and a hole in a plate;
- figure 12 shows the effect of applying a constraint between a set of screws and a set of holes in a plate.

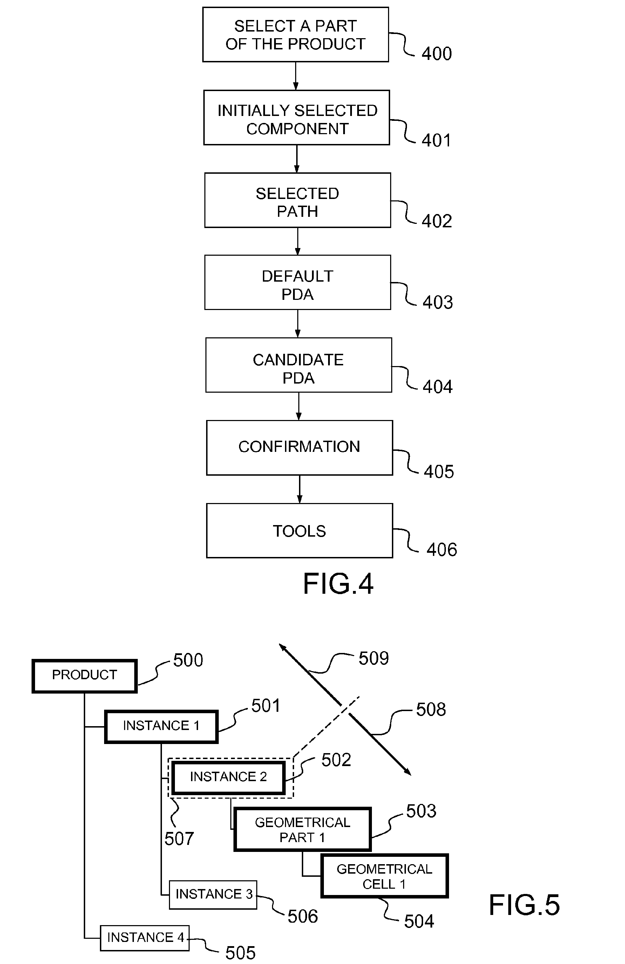

Figure 4 provides a simplified diagram of the method according to the invention.

When the user wants to modify a component in a product, he first has to select a part of the product 400. The product is displayed for example in a two-dimensional or in a three-dimensional representation. This selection can be made by positioning a cursor on the area of a graphical representation of the product corresponding to the component he wants to modify and by clicking once the cursor is correctly positioned. A component of the product tree is then selected and is called "initially selected component" 401.

In a preferred embodiment, the initially selected component is by default the component of the lowest hierarchical level on which the cursor is positioned at the time of selection. Therefore, it is likely that this component will be a graphical cell of the product tree.

In a product tree, the highest hierarchical level corresponds to the root component and the lowest hierarchical level corresponds to a component located at the end of a tree's branch, the said branch comprising the maximum number of components compared to the other branches in the product tree.

The initially selected component can be highlighted on the graphical representation of the product, for example by using a specific colour.

Once a component has been initially selected, a path in the product tree called "selected path" is automatically constructed 402. The selected path is composed of an ordered set of components identifiers. As an example, the first identifier corresponds to the root of the product tree and the last identifier corresponds to the initially selected component.

Once the selected path has been constructed, a component that belongs to this path is set up by default as the current PDA 403. In a preferred embodiment of the invention, the component of the lowest hierarchical level and which belongs to the selected path is chosen as the default PDA.

The component that has been selected as the current PDA can be highlighted on the graphical representation of the product, for example by using a specific colour.

Then the user is able to select the component on which he wants to work. For that purpose, the method comprises a step during which the user may change the current PDA 404 by moving it from one component to another component belonging to the selected path. A candidate PDA can be highlighted by using a specific colour, thus the user can visually follow the PDA modification.

As an example, a way to move along the selected path from one component to the other is to use the scroll wheel of a mouse. By scrolling along the selected path, the user will change the candidate PDA in one direction or the other.

The PDA change can then be confirmed 405 by the user by clicking with the use of a mouse button.

Once the PDA change is confirmed, the candidate component is considered as the current PDA.

Then, the system activates the functionalities 406 required for modifying the component designated as the PDA. In a preferred embodiment, shortcuts towards those functionalities are displayed near the graphical representation of the product. Therefore, the user can choose rapidly the functionality required to modify the PDA component. One advantage is that only the functionalities required to modify the PDA component are accessible to the user. Thus, the user is less confused and can make the appropriate choices faster. This participates to the productivity enhancement.

Another advantage of this method is that the product tree does not need to be displayed. The method uses the product tree to construct the selected path and to change the current PDA, when the current and candidate PDA are highlighted, the display of the product tree is not required to understand "where he is" in the design.

Alternatively, the method can also be applied on a representation of the product tree instead of on a representation of the product itself.

Figure 5 represents a product tree in which a component has been selected as the perimeter of the design action.

The product tree has the same structure as the examples provided by figures 1, 2 and 3. The product 500 comprises two main instances 501, 505. One of those two instances 501 comprises two sub-instances 502, 506. The sub-instance 502 comprises a geometrical part 503 and this geometrical part 503 comprises a geometrical cell 504.

In this product tree, the instance 502 has been selected as the current PDA component 507. As a consequence, the design functionalities required to modify this component are made available to the user. If the user wishes to work on another component, he can use scrolling means in order to select another component 508, 509 belonging to the selected path.

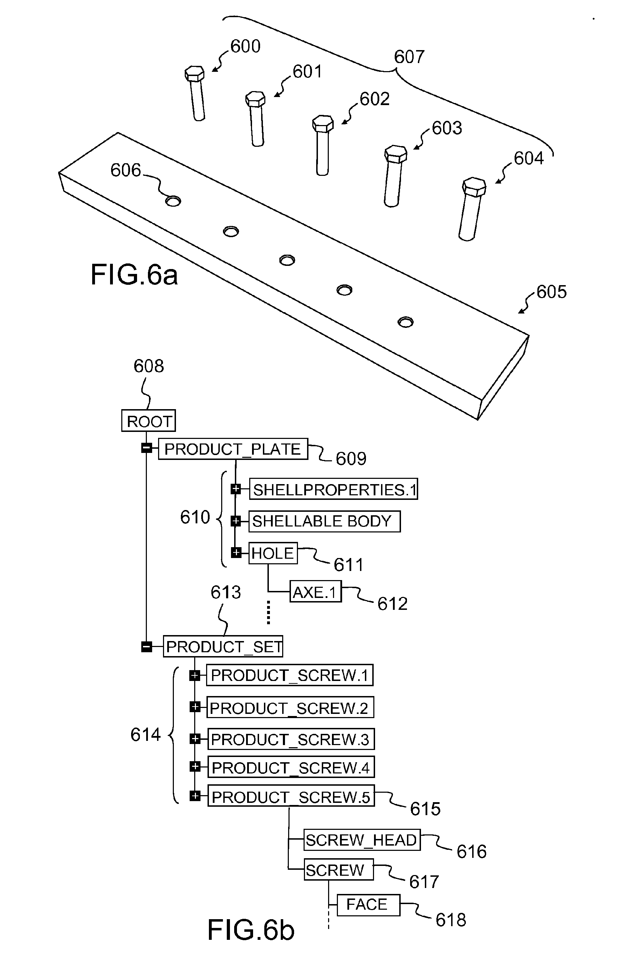

Figures 6a is a three-dimensional representation of a product comprising a plate and a set of screws.

The set of screws 607 comprises five screws 600, 601, 602, 603, 604. The plate 605 comprises one hole 606. At this design stage, there are no interactions between the set of screw 607 and the plate 605.

Figure 6b gives an example of a product tree that can be associated to the product illustrated on figure 6a. The root component 608 represents the overall product. As already mentioned, this product comprises two sub-products, that is to say the plate and the set of screws. Therefore, two instances 609, 613 are defined. Additionally, the set of screw comprises five screws. Thus, five product instances 614 are defined. Each screw instance 615 comprises two geometrical parts 616, 617. The first geometrical part 616 corresponds to the head of the screw and the second geometrical part 617 corresponds to a helical ridge wrapped around a cylinder. The second geometrical part 617 comprises at least one geometrical cell 618 associated to the characteristics of the cylinder and of the helical ridge. This geometrical cell 618 is designated by the word 'face' in this description.

The sub-product instance 609 corresponds to the product plate 605. It comprises three geometrical parts 610. One of those three geometrical parts 611 corresponds to the hole 606 of the plate. It comprises at least one geometrical cell 612 associated to the hole's axis.

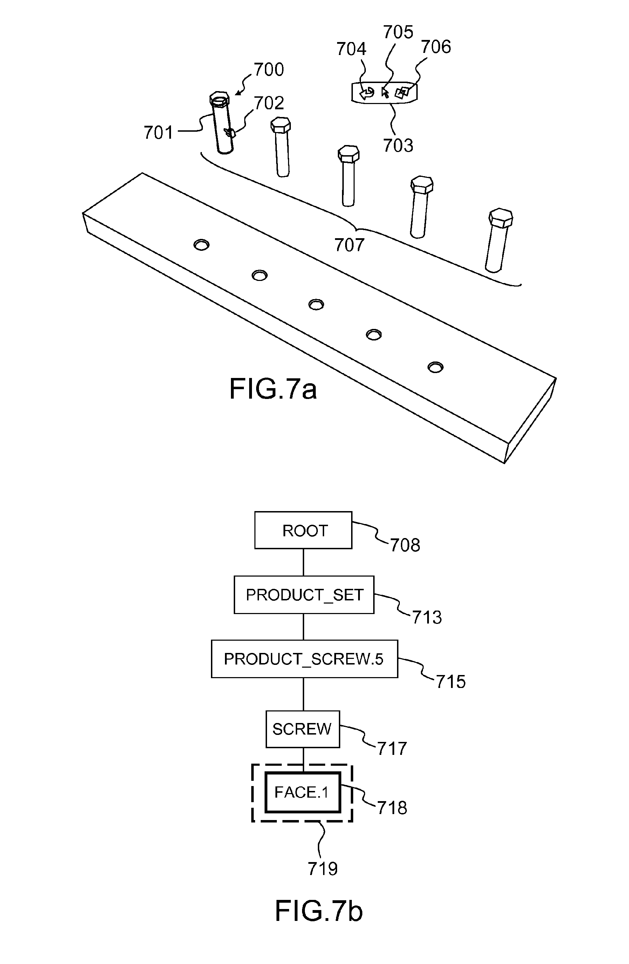

Figure 7a illustrates the step of initially selecting a geometrical cell in the product and figure 7b illustrates the selected path that has been constructed after selecting this component.

In the three-dimensional representation of the product, the geometrical cell 'face' belonging to the fifth screw 700 of set of screw 707 is selected by positioning a cursor 702 over the area corresponding to the cylinder 701 and by clicking on it with a mouse button. The selected geometrical cell is the initially selected component. It is highlighted for example by using a predefined color. The selected path is then constructed. This path is deducted from the product tree given by figure 6b and from the initially selected component. Thus, the selected path comprises the root component 608, 708, the instance 613, 713 associated to the set of screws, the instance 615, 715 associated to the fifth screw of this set, the graphical part 617, 717 corresponding to the helical ridge and to the cylinder and the graphical cell 618, 718 associated to the "face" of the screw.

The graphical cell 618, 718 is set up by default as the PDA component 719. Therefore, functionalities that can be used to modify the screw face are made available to the user. In this example, a window 703 is displayed near the three-dimensional representation of the product and contains three icons 704, 705, 706. A first icon 704 allows the user to undo its previous action, a second icon 705 allows to set up the cursor in a way that a component can be selected and a third icon 706 is specific to the current PDA. In this example, the third icon 706 allows to define the helical ridge characteristics of the screw.

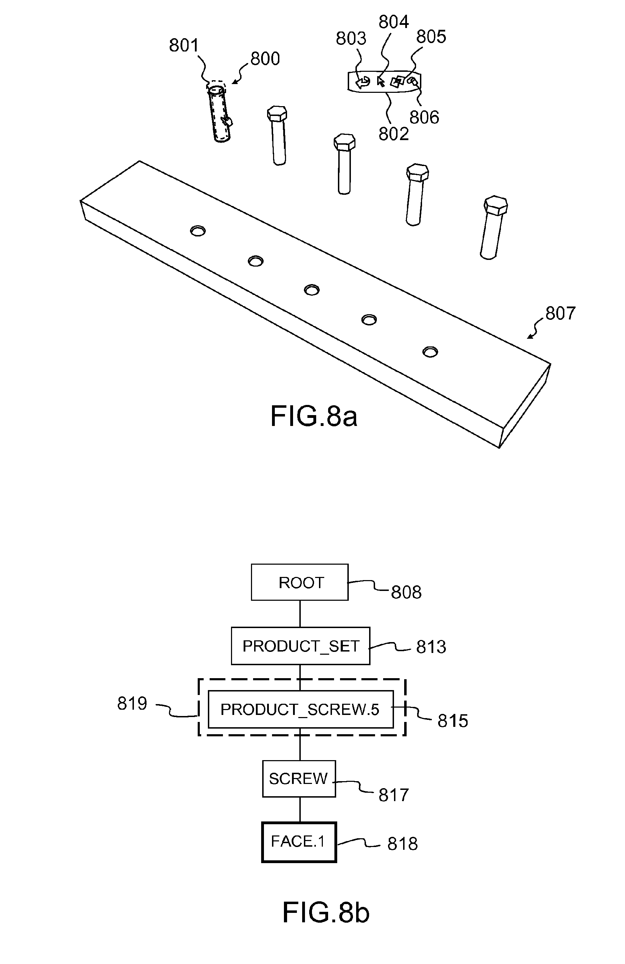

Figure 8a illustrates the step of setting up the product instance associated to the fifth screw as the current PDA component and figure 8b gives the location of the PDA component in the selected path.

The selected path remains unchanged and comprises the root component 608, 808, the instance 613, 813 associated to the set of screws, the instance 615, 815 associated to the fifth screw of this set, the graphical part 617, 817 corresponding to the helical ridge and to the cylinder and the graphical cell 618, 818 associated to the "face" of the screw. By using the scrolling means, the user has changed the current PDA component. For that purpose, he moves a candidate PDA along the selected path up to the fifth screw product instance 815 that becomes the new current PDA component 819 once selected. The candidate PDA is highlighted for easing the choice of a new current PDA. The fifth screw which is now the current PDA stays highlighted, for example by using a predefined color which is different from the one used for initially selected component.

At this stage, the functionalities that are available to the user are also displayed in a window 802 near the three-dimensional representation of the product. It contains three icons 803, 804, 805 linked to the same functions as depicted with the use of figure 7a. Moreover, a fourth icon 806 is added to the window 802. This new icon allows the user to add a design constraint between the fifth screw whose product instance has been selected as the current PDA component and another product instance, for example the plate 807.

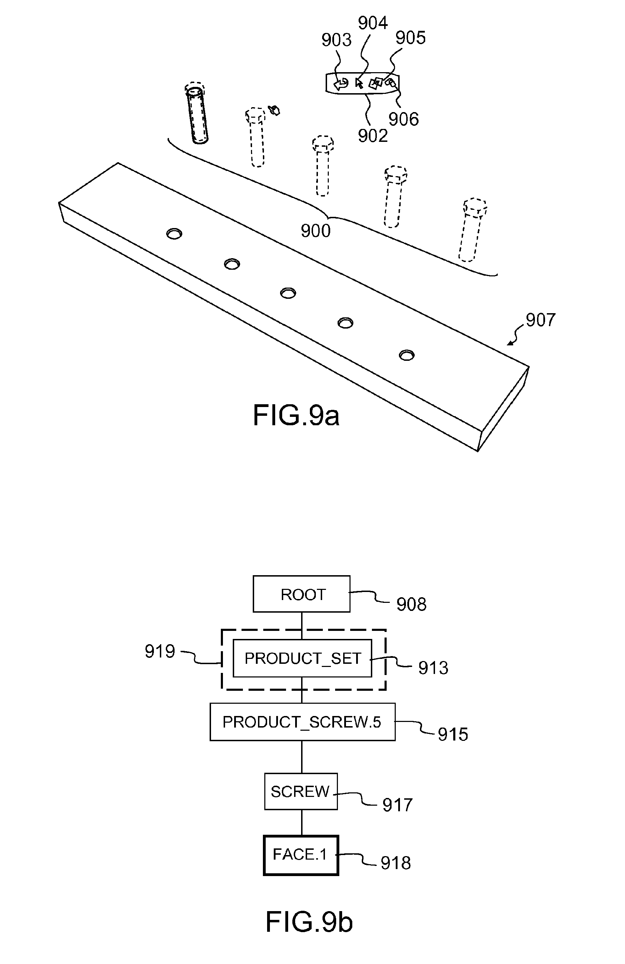

Figure 9a illustrates the step of setting up the product instance associated to the set of screws as the current PDA component and figure 9b gives the location of the PDA component in the selected path.

The selected path remains unchanged and comprises the root component 608, 908, the instance 613, 913 associated to the set of screws, the instance 615, 915 associated to the fifth screw of this set, the graphical part 617, 917 corresponding to the helical ridge and to the cylinder and the graphical cell 618, 918 associated to the "face" of the screw. By using the scrolling means, the user can change the current PDA component. For that purpose, he moves a candidate PDA along the selected path up to the product instance associated to the set of screws 913 that becomes the new current PDA component 919 after being selected. With the entire set of screws defined as the current PDA, the five screws 920, 921, 922, 923, 924 on the three dimensional representation of the product are highlighted by using a predefined color. It shows to the user that the functionalities that are made available to him will act on these five screws together.

The functionalities that are made available to the user are also displayed in a window 902 near the three-dimensional representation of the product. It contains three icons 903, 904, 905 linked to the same functions as depicted with the use of figure 7a. Moreover, a fourth icon 906 is added to the window 902. This icon allows the user to add a design constraint between the set of screws whose associated product instance has been selected as the current PDA component and another product instance, for example the plate 907. The difference with the example of figure 8a and 8b is that the constraint will be applied for all of screws that belong to the set.

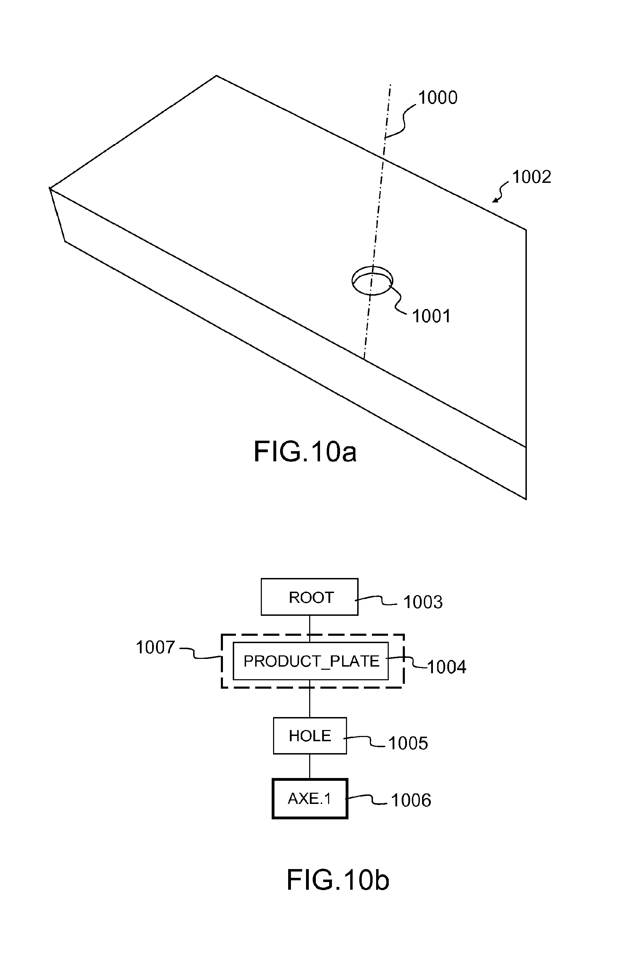

Figure 10a and 10b show how a constraint between the plate and one or several screw can be introduced.

Once the initially selected component and the current PDA component have been set up, the user can add a constraint with one or several other components. In this example, the user clicks on the axe 1000 of the hole 1001 made in the plate 1002. The effect is that second path is created from the geometrical cell 1006 associated to the axe up to the root 1003 of the product tree and passing through the geometrical part 611, 1005 associated to the hole and the product instance 609, 1004 associated to the plate.

For this second path, the PDA component 1007 is set-up automatically and corresponds to the product instance 609, 1004 associated to the plate.

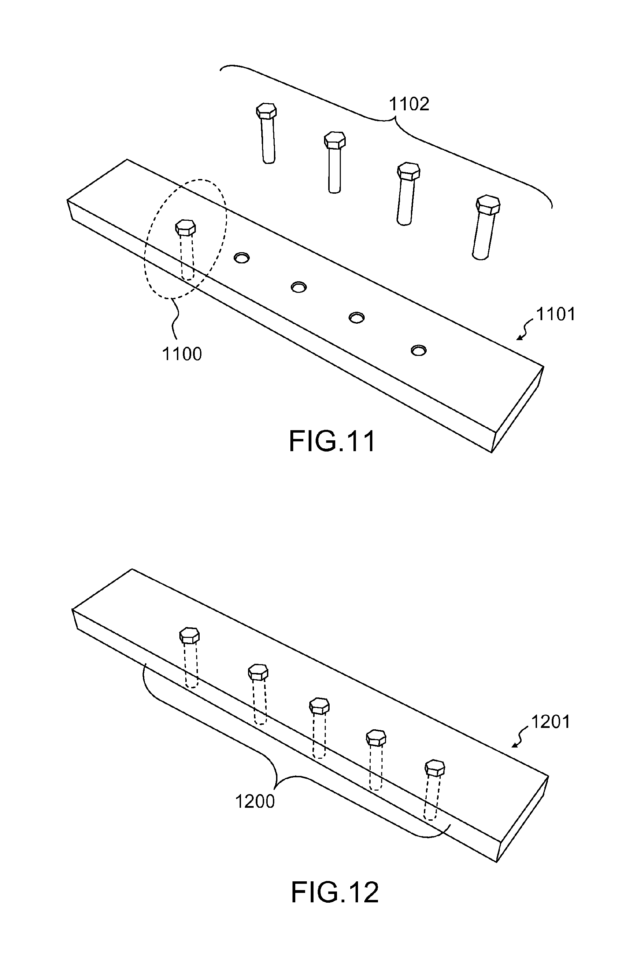

Figure 11 shows the effect of applying a constraint between a screw and a hole in a plate 1101.

In this example, a sub-product instance associated a single screw has been chosen as the current PDA. Then the user decides to apply a constraint between the screw and the plate. For that purpose, he uses a functionality that is made available to him when selecting the current PDA. Then he selects a geometrical cell associated to one of the hole's axis. Once the constraint is validated by the user, the screw associated to the current PDA is inserted in the plate's hole which axis has been selected 1100. The other screws 1102 stay at their initial place as the constraint has been applied only to the current PDA.

Figure 12 shows the effect of applying a constraint between a set of screws and a set of holes in a plate 1201.

In this example, a sub-product instance associated a set of screws has been chosen as the current PDA. Then the user decides to apply a constraint between the set of screws and several holes in a plate 1201. For that purpose, he uses the functionality that is made available to him when selecting the current PDA. Then he selects a geometrical cell associated to one of the hole's axis. Once the constraint is validated by the user, the screws associated to the current PDA are inserted 1200 the plate's holes which axis have been selected. The constraint has been applied to all the screws because those are associated to the same sub-product, this sub-product being chosen as the current PDA.

## Claims

1. A computer-implemented method of designing a product, the product being composed of an assembly of components organised hierarchically in a product tree, the method comprising the steps of :
- initially selecting a component (400, 401) ;
- determining a path (402) comprising the product tree's components located between the root of the product tree (500) and the initially selected component (504) ;
- navigating (508, 509) through this path by using a scrolling mean in order to choose (403, 403) a candidate component among the path's components ;
- selecting (405) the said candidate component as a perimeter of design action PDA component;
- activating at least a functionality (406) required for modifying the component defined as the perimeter of design action.

2. The method according to claim 1, wherein the initially selected component is chosen as the default perimeter of design action.

3. The method according to claim 1 or 2, wherein the initially selected component and the candidate component are selected by a user on a graphical representation of the product.

4. The method according to claim 3, wherein the initially selected component is selected by positioning a cursor (702) on a given area of the graphical representation of the product and by clicking on it.

5. The method according to claim 4, wherein the initially selected component is the component that has the lowest hierarchical level in the product tree and on which the cursor is positioned at the time of selecting it.

6. The method according to any of the previous claims wherein shortcuts towards the functionalities that has been activated for modifying the component designated as the perimeter of design action are displayed near the graphical representation of the product.

7. The method according to claim 1, wherein the initially selected component and the candidate component are selected on a graphical representation of the product tree.

8. The method according to any of the previous claims wherein the scrolling mean is a scroll wheel comprised in a computer mouse.

9. The method according to any of claims 1 to 5 wherein the scrolling mean is a touch screen on which the user interact with two fingers, the candidate component being moved towards the higher levels of hierarchy of the product tree (509) when the two fingers move away from each other, and the candidate component being moved towards the lower levels of hierarchy of the product tree (508) when the two fingers approach each others.

10. The method according to any of the previous claims, wherein the component designated as the perimeter of design action is highlighted on the graphical representation of the product.

11. A computer program product, stored on a computer readable medium comprising code means for causing a computer to implement the method of any one of the claims 1 to 10.

12. An apparatus for designing an assembly of objects in a system of computer-aided design, the apparatus comprising means for implementing the steps of the method of anyone of claims 1 to 10.
